# EUROPEAN PATENT APPLICATION

(11) **EP 1 705 525 A1**
(43) Date of publication of application: **27.09.2006**
(21) Application number: 03768317.4
(22) Date of filing: 26.12.2003
(51) Int. Cl.: G03G 9/097, C07F 7/04

(54) **POSITIVE ELECTROSTATIC CHARGE CONTROL AGENT AND TONER FOR DEVELOPING ELECTROSTATIC IMAGE**

(71) Applicant: ORIENT CHEMICAL INDUSTRIES, LTD., Osaka-shi, Osaka 535-0022 (JP)
(72) Inventor: YAMATE, Osamu, Neyagawa-shi, Osaka 572-8581 (JP); YUSHINA, Heihachi, Neyagawa-shi, Osaka 572-8581 (JP)
(74) Representative: Jönsson, Hans-Peter
(86) International application number: PCT/JP2003/016898
(87) International publication number: WO 2005/066719

(57) **Abstract**

A positive electrified charge control agent comprises a silicon complex compound bonding with covalent of a central silicon atom and oxygen originated from a hydroxyl group, which bonds to an organic group, and bonding with coordination of the central silicon atom and a carbonyl group of equivalent to the oxygen,
the silicon complex compound comprises a trivalent to univalent cation and a trivalent to univalent anion having 1 to 3 equivalents of the oxygen and the carbonyl group to the central silicon atom.

## Description

### Technical Field

This invention relates to a positive electrified charge control agent which is used for a toner for developing an electrostatic image or a powder paint, the toner for developing an electrostatic image including the agent, and a charge control method of the toner.

### Background Art

Electro photography applied to a copy machine, printer or facsimile performs to develop an electrostatic latent image on a photosensitive frame with toner having frictional electrification and then the imaged toner is transferred and fixed to copy or print onto paper.

The electrification property of the toner is an important factor to raise a development speed of electro photography and form the vivid image. Therefore, a charge control agent is added to the toner so as to control a proper quantity of the electrification stably and quicken a rise speed of the electrification. The charge control agent is for positive or negative electrification. For instance, as the positive electrified charge control agent, it is disclosed in Japanese Patent Provisional Publication Nos. 63-206768 and 62-62369. As the negative electrified charge control agent, it is disclosed in Japanese Patent Provisional Publication No. 3-276166. The charge control agents disclosed in those publications are organic metal complex compounds which organic ligands are coordinated to a central atom of metal such as aluminum, tin, lead, cobalt, iron, nickel, zinc, chromium, copper, barium, and beryllium. While the charge control agent for negative electrification disclosed in Japanese Patent Provisional Publication No. 4-293057 is compound which organic ligands are coordinated to organic ligand to a central atom of silicon.

It is required that the toner has more excellent electrification property and stability than prior toner to achieve high speed and high definition in copying and printing. Furthermore it is required that the toner and the charge control agent included thereto have preservation stability and environmental hygiene on the latest trend.

Moreover it is required that the charge control agent is able to be used of a powder paint for a electrostatic powder paint method which attracts and bakes the electrified powder paint onto a surface of a frame work having charge, and has the proper electrification property and stability.

The charge control agent disclosed in Japanese Patent Provisional Publication No. 4-293057 causes the electrification property and stability of the toner, and has excellent preservation stability and environmental hygiene. So the agent has negative electrification property, the toner including the agent is the negative electrified toner. The toner is used for developing of a positive electrostatic image on a photosensitive frame.

The present invention has been developed to solve the foregoing problems. It is an object of the present invention to provide the charge control agent which causes excellent positive electrification property of the toner for developing the electrostatic image and the powder paint, and the toner for developing the electrostatic image including the agent which has excellent electrification stability, preservation stability, environmental hygiene and makes high definition of the developed image. It is another object of the present invention to provide the charge control method using the toner.

### Disclosure of Invention

The positive electrified charge control agent of the present invention developed for accomplishing the foregoing object, comprises a silicon complex compound bonding with covalent of a central silicon atom and an oxygen originated from a hydroxyl group, which bonds to an organic group, and bonding with coordination of the central silicon atom and a carbonyl group of equivalent to the oxygen,
the silicon complex compound comprises a trivalent to univalent cation and a trivalent to univalent anion having 1 to 3 equivalents of the oxygen and the carbonyl group to the central silicon atom.

The silicon complex compound is represented by the following chemical formula (I) 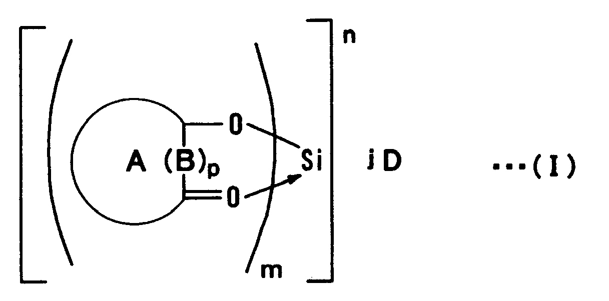 in the formula (I), m and j are 1 to 3, n is 3+ to 1+, D is the univalent to trivalent anion, A is a chain organic or cyclic organic residuary group, B is a carbon atom or a nitrogen atom, p is 0 or 1.

For example, in the formula (I) wherein a group of 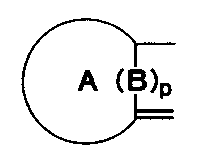 is selected from the groups represented by the following formulas (II) 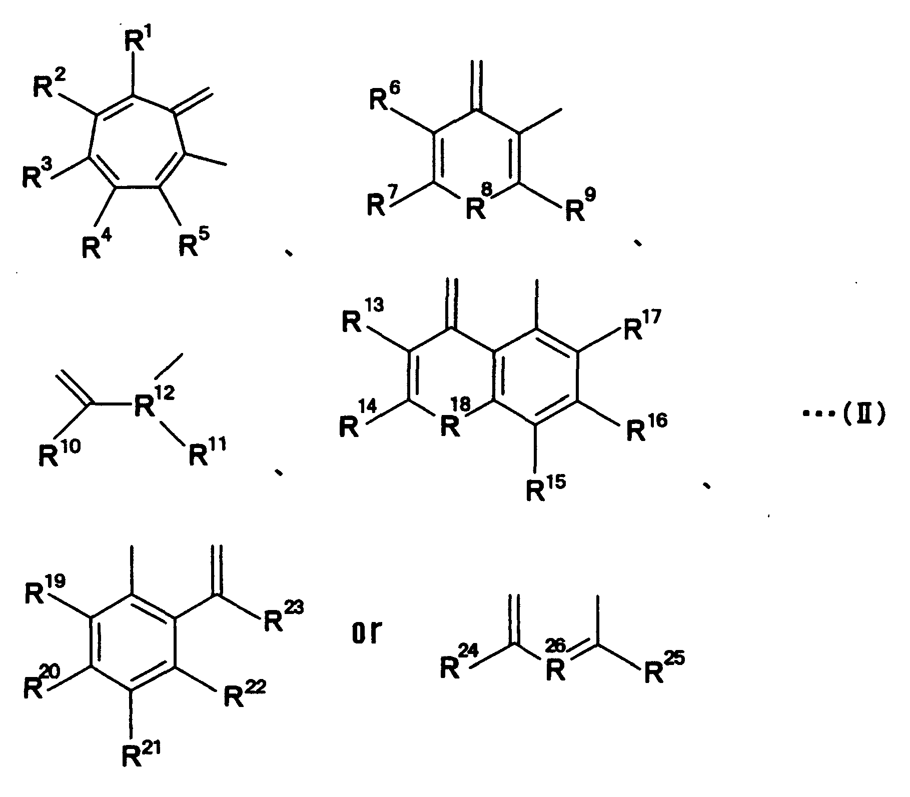 in the formulas (II), R¹ to R⁷, R¹³ to R¹⁷, R¹⁹ to R²² are same or different to each other and one thereof is selected from the groups consisting of a hydrogen atom, a hydroxyl group, a hydroxyalkyl group, a carboxyl group, an alkoxycarbonyl group, a formyl group, a halogen atom, an alkyl group, an alkoxyl group, an acyl group, an alkenyl group, a nitro group, a cyano group, an amino group, an alicyclic group being to have substitutional groups, an aralkyl group being to have substitutional groups and an aryl group being to have substitutional groups, or a group had 3 to 7 carbons forming a saturated or unsaturated fused-ring at positions of neighboring group being to have substitutional groups; R⁸ and R¹⁸ are an oxygen atom, a carbonyl group, or an imino group; R⁹ to R¹¹, R²³ to R²⁵ are same or different to each other and one thereof is selected from the groups consisting of a hydrogen atom, a hydroxyl group, a hydroxyalkyl group, a carboxyl group, an alkoxycarbonyl group, a formyl group, a halogen atom, an alkyl group, an alkoxyl group, an acyl group, an alkenyl group, a nitro group, a cyano group, an amino group, an alicyclic group being to have substitutional groups, an aralkyl group being to have substitutional groups and an aryl group being to have substitutional groups; R¹² is a methine or a nitrogen atom; R²⁶ is a nitrogen atom or a carbon atom being to have substitutional groups.

In the formulas (II), examples of the halogen atom are Cl, Br, I and F. The alkyl group has for example 1 to 18 carbon atoms, and examples thereof are a methyl group, an ethyl group, a propyl group, an isopropyl group, a butyl group, and a tert-butyl group. The alkoxyl group has for example 1 to 18 carbon atoms, and examples thereof are a methoxyl group, an ethoxyl group, and an isopropoxyl group. Examples of the acyl group are an acetyl group, a propionyl group, a butyryl group, and a benzoyl group. Examples of the alkenyl group are an allyl group: -CH₂CH=CH₂, and -C(CH₃)=CH₂. Examples of the aryl group being to have the substitutional groups illustrated by a halogen atom such as Cl, Br, I, or F, and an alkyl group having 1 to 18 carbon atoms, are a phenyl group, a tolyl group, a naphthyl group. Examples of the alicyclic group being to have substitutional groups are a cycloalkyl group having 3 to 7 carbon atoms such as a cyclopropenyl group, a cyclobutyl group, a cyclohexyl group, a cycloheptyl group. Examples of the aralkyl group being to have substitutional groups are a benzyl group and an alpha, alpha'-dimethylbenzyl group.

Examples of the group had 3 to 7 carbons forming the saturated or unsaturated fused-ring at the positions of neighboring group being to have the substitutional groups are a cyclopropene ring, a cyclopropane ring, a cyclobutadiene ring, a cyclobutane ring, a cyclopentadiene ring, a cyclopentane ring, a cyclohexane ring, a cycloheptatriene ring, and a benzene ring. And example of the substitutional groups which the fused-ring are to have, is a group having 3 to 7 carbons such as an alkyl group, an alkoxyl group, an acyl group, an aralkyl group, an alicyclic group, and an alkenyl group.

In the above-mentioned chemical formula (I), examples of D of univalent to trivalent anion are a halogenide ion; an organic acid anion such as a sulfonic acid anion or a carboxylic acid anion; a fatty acid anion; an organic anion; an inorganic anion such as OH-, SO₄²⁻, NO₃⁻.

A toner for developing an electrostatic image of the present invention includes a component of the above-mentioned positive electrified charge control agent.

It is preferable that the positive electrified toner for developing the electrostatic image includes 0.1 to 10 parts by weight of the charge control agent and 100 parts by weight of a resin for the toner. The toner may include colorant. It is more preferable that the toner includes 0.5 to 5 parts by weight of the charge control agent.

The positive electrified toner for developing the electrostatic image is preferable that the charge control agent and the colorant are added internally and kneaded to the resin for the toner. Guest particles including the charge control agent may adhere to the surface of host particles including the resin for the toner and the colorant. The host particles may include the charge control agent. The guest particles may include the resin for the toner.

A charge control method of the toner for developing the electrostatic image of the present invention comprises a step for making the toner positively electrify by friction.

The positive electrified charge control agent of the invention includes the effective component of the silicon complex compound represented the above chemical formula (I) which is salt of the cation of the silicon complex compound and the anion. For example, a compound having the hydroxyl group and the carbonyl group that is represented by the following chemical formula (III) 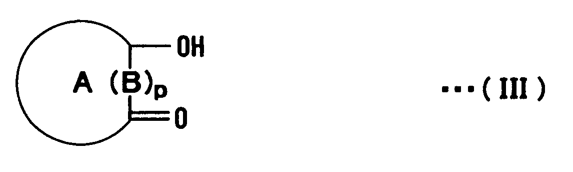 (in the formula (III), A is the chain organic or cyclic organic residuary group, B is the carbon atom or the nitrogen atom, p is 0 or 1)
is reacted to tetrachlorosilan or tetraethoxysilan, to obtain the silicon complex compound represented by the above formula (I) which is bonding with covalent of a central silicon atom originated from tetrachlorosilan etc. and oxygen originated from the hydroxyl group, and bonding with coordination of the central silicon atom and the carbonyl group.

The silicon complex compound of the chemical formula (I) wherein m is 1, is represented by the following chemical formula (IV) 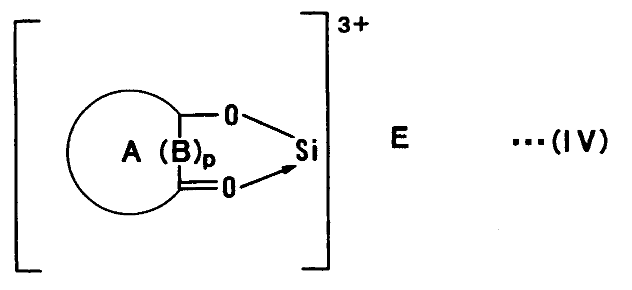 in the formula (IV), E is (univalent anion)₃, or (trivalent anion)₁.

The similar compound of the chemical formula (I) wherein m is 2, is represented by the following chemical formula (V) 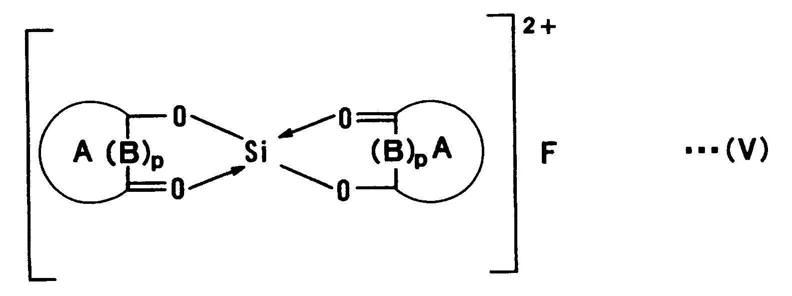 in the formula (V), F is (univalent anion)₂, or (divalent anion)₁.

Examples of the compound are Compound Example 1 to 4 represented by the following chemical formulas.

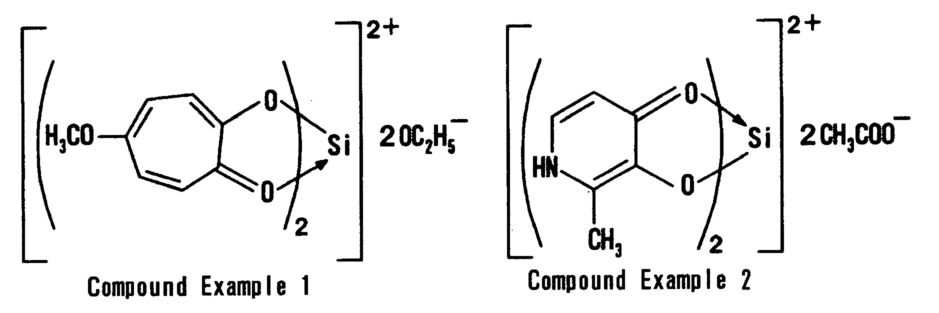

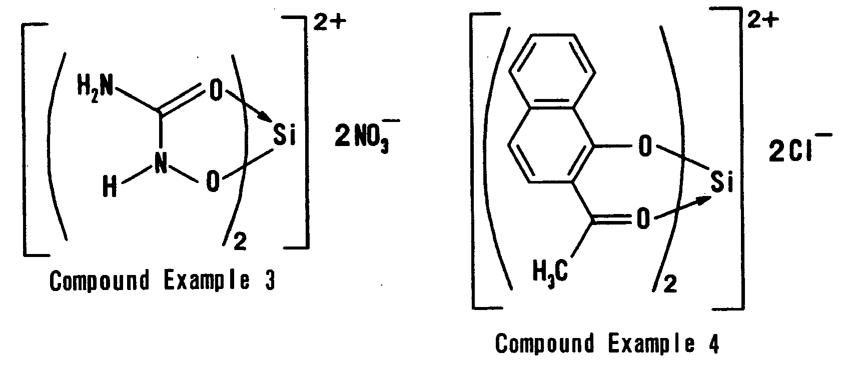

The similar compound of the chemical formula (I) wherein m is 3, is represented by the following chemical formula (VI) 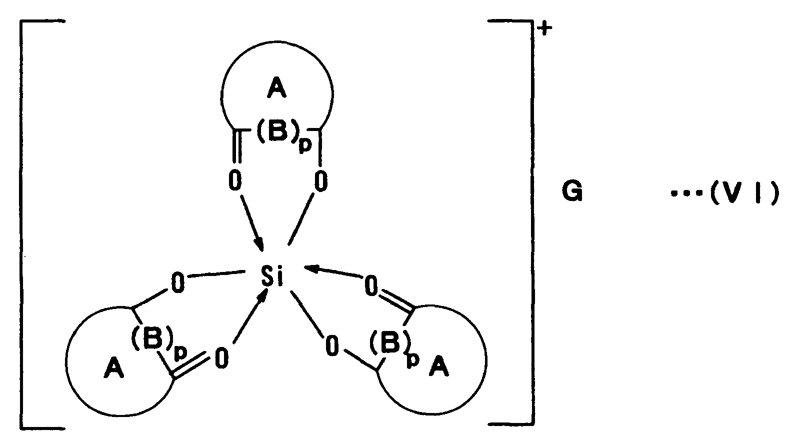 in the formula (V), G is univalent anion.

Examples of the compound are Compound Example 5 to 24 represented by the following chemical formulas.

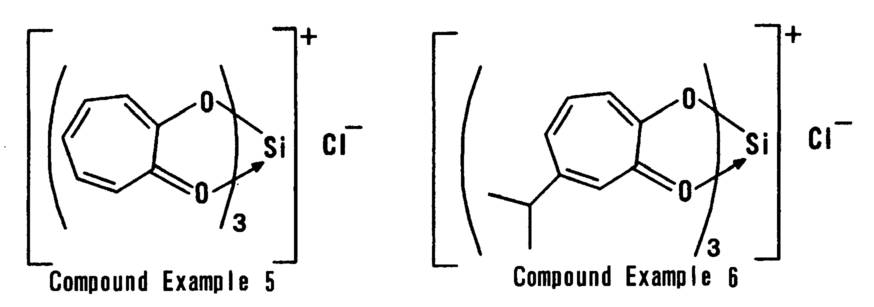

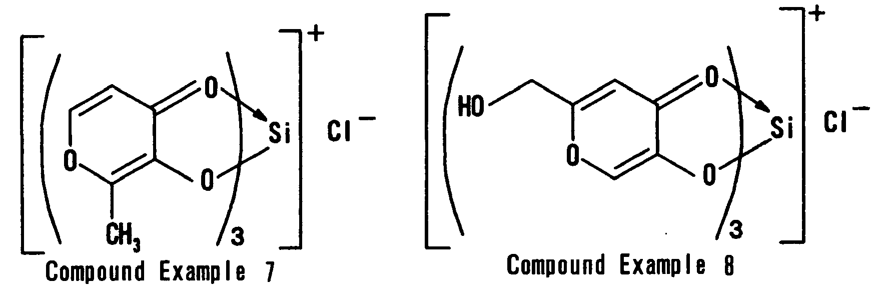

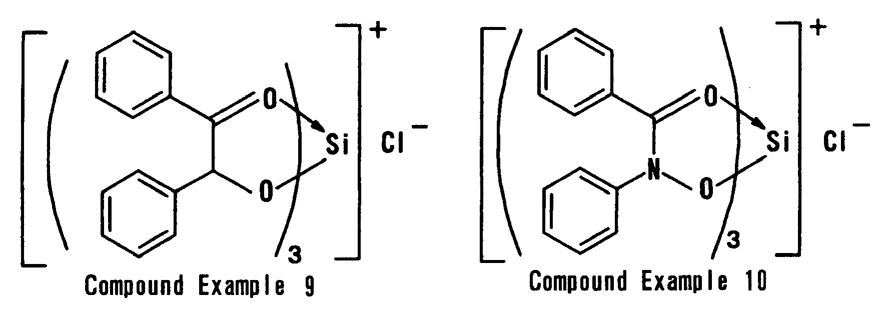

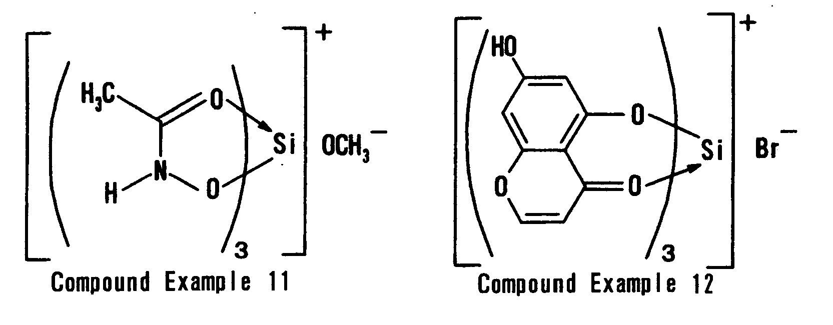

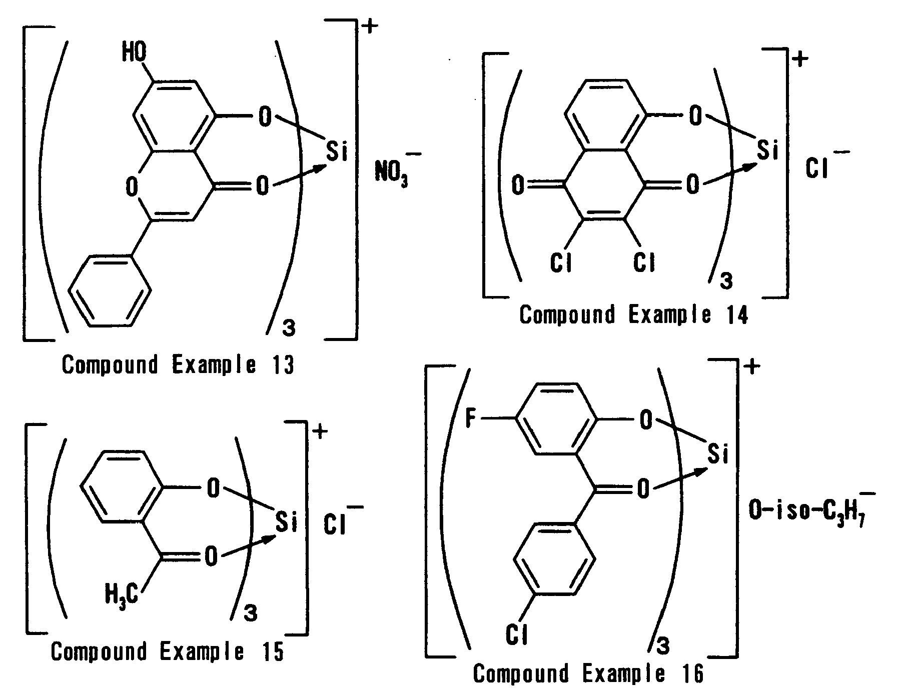

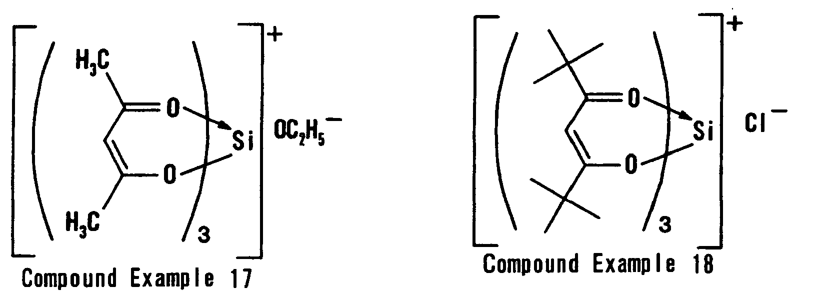

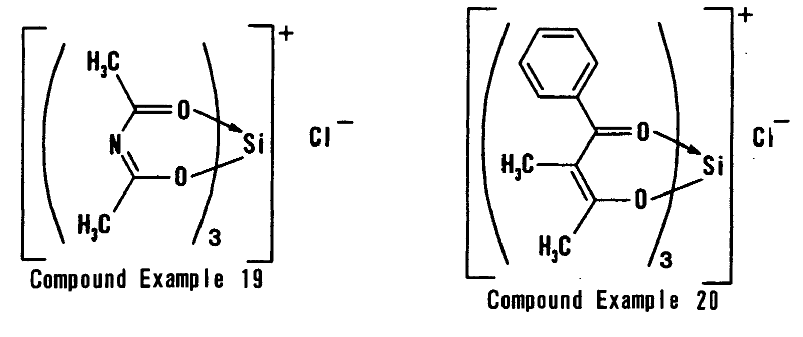

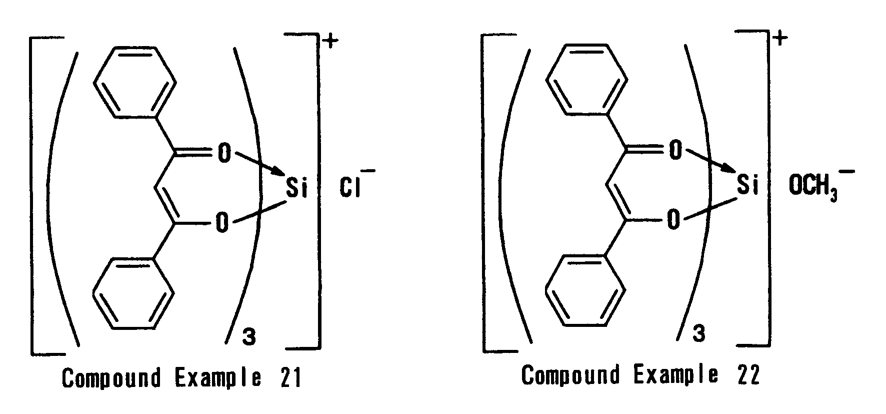

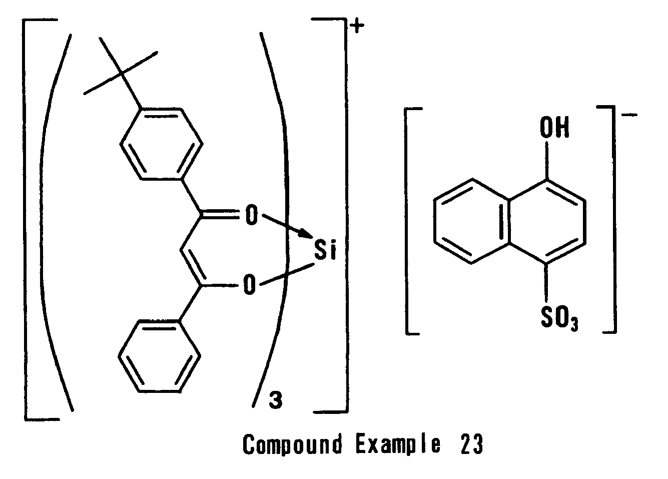

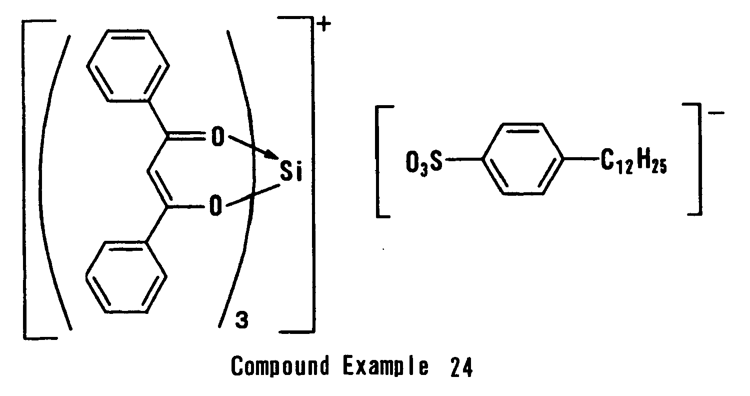

The charge control agent may comprise the sole compound or the plural compounds that are differ structure among these silicon complex compounds. The charge control agent may comprise usual charge control agents together.

The toner for developing the electrostatic image of the invention comprises the charge control agent, the resin for the toner, the colorant. If necessary to improve quality of the toner, the toner is appropriately comprises a magnetic material, a fluid improvement agent or an offset prevention agent.

Examples of the resin for the toner are a commercial binding resin such as a thermoplastic resin illustrated by a styrene resin, a styrene-acrylate resin, a styrene-butadiene resin, a styrene-maleic acid resin, a styrene-vinylmethylether resin, a styrene-methacrylate copolymer, a polyester resin, a polypropylene resin; a thermosetting resin illustrated by a phenol resin, an epoxy resin. The exemplified resin may be used solely or plurally with blending.

When the resin for the toner is used to mix for the toner for full color by subtractive mixture of color stimuli, or the toner for an overhead projector (OHP), it is required that the resin for the toner has transparency, nearly colorless which color tone obstruction of toner images is not generated, excellent compatibility with the charge control agent, flowability under proper heat or pressure, possibility of fining. It is preferable that the resin for the toner is a styrene resin, an acrylate resin, a styrene-acrylate resin, a styrene-methacrylate copolymer, or a polyester resin.

Moreover, when the charge control agent of the invention is included in the electrostatic powder paint and controls and raises the charge of the resin powder in the paint, examples of the resin in the paint are a thermoplastic resin such as an acrylate resin, a polyolefin resin, a polyester resin, a polyamide resin; a thermosetting resin such as a phenol resin, an epoxy resin. The exemplified resin may be used solely or plurally with blending.

A dye, a pigment may be used solely or plurally with blending, as the colorant for the toner for color or the electrostatic powder paint.

Examples of the colorant for the toner for color are organic pigment such as quinophtharone yellow, hansa yellow, isoindolinone yellow, benzidine yellow, perinone orange, perinone red, perylene maroon, rhodamine 6G lake, quinacridone red, rose bengale, copper phthalocyanine blue, copper phthalocyanine green, diketopyrrolopyrrole; inorganic pigment and metallic powder such as carbon black, titanium white, titanium yellow, ultramarine, cobalt blue, red iron oxide, aluminum powder, bronze; oil soluble dye and disperse dye such as an azo dye, a quinophthalone dye, an anthraquinone dye, a xanthene dye, a triphenylmethane dye, phthalocyanine dye, indophenol dye, indoaniline dye; triarylmethane dye modified with a resin illustrated as rosin, phenol that modified by rosin, maleic acid that modified by rosin; a dye and a pigment processed with higher fatty acid or resin and so on. The colorant may be used for the toner for color solely or plurally with blending. The dye and pigment having excellent spectral characteristics are used for regulation of the primary colors toner for full color suitably.

Moreover, examples of the colorant for the toner for chromatic mono-color are combinations of similar colors pigment and dye such as suitable combination of rhodamine pigment and dye, quinophthalone pigment and dye, phthalocyanine pigment and dye.

Examples of the magnetic material are ferromagnetic particulates such as iron, cobalt, and ferrite. Examples of the fluid improvement agent are silica, aluminum oxide, and titanium oxide. Examples of the offset prevention agent are wax, olefin wax having low molecular weight.

The toner for developing the electrostatic image is manufactured as follows. The charge control agent, the resin for the toner, the colorant, if necessary the magnetic material, the fluid improvement agent, or the offset prevention agent are sufficiently mixed by a blender such as a ball mill. It is kneaded with melting by a heat-kneading machine such as a heating roll, a kneader or an extruder. After carrying out the cooling solidification thereof, it is granulated and classified, to obtain the unary toner for the electrostatic image development, the toner particles by the granulation method, having the average particle size ranging from 5 to 20 microns.

It is able to manufacture by a preparing method of the toner particles under spraying and drying of a solution of each component, a suspension polymerization method, or an emulsion polymerization method.

The suspension polymerization method is as follows. A monomer of the resin for the toner, the charge control agent, the colorant, and if necessary the magnetic material, the fluid improvement agent, the offset prevention agent, and an additive agent such as a polymerization initiator, a cross linking agent and a mold release agent are solved or dispersed homogeneously, to obtain a monomer composition. The composition is carried out polymerization reaction in continuous phase including a dispersion stabilizer such as aqueous phase with dispersing by a dispersion apparatus, to obtain the toner particles having desired particle size.

Examples of the monomer are styrene derivative such as styrene, methylstyrene; (meth)acrylate such as methyl acrylate, ethyl acrylate, ethyl methacrylate, n-butyl methacrylate; vinyl monomer such as acrylonitrile, methacrylonitrile, acrylamide.

Examples of dispersion stabilizer are a surface active agent such as sodium dodecylbenzenesulfonate; an organic dispersion agent such as polyvinyl alcohol, methyl cellulose, methylhydroxypropyl cellulose; an inorganic dispersion agent such as fine powder of polyvalent metal phosphate illustrated by calcium phosphate, magnesium phosphate and aluminum phosphate, fine powder of carbonate illustrated by calcium carbonate and magnesium carbonate; calcium metasilicate, calcium sulfate, barium sulfate, calcium hydroxide, aluminum hydroxide.

Examples of the polymerization initiator are azo or diazo initiators such as 2,2'-azoisobutyronitrile, azobisbutyronitrile; peroxide initiator such as benzoyl peroxide.

Moreover the other toner for developing the electrostatic image is manufactured as follows. The host particles are the toner particles including the charge control agent by the above-mentioned granulation or polymerization method. The guest particles consisting of the particles of the charge control agent, or the guest particles including the particles which the charge control agent of 10 to 90 percent by weight is dispersed into the resin having dispersibility of the charge control agent, make adhesion to the surfaces of the host particles, to obtain the toner.

Examples of the method that the guest particles make adhesion to the surfaces of the host particles, are an external addition method, and a method that the guest particles are stuck to the host particles by a hybridization system. Examples of the resin having dispersibility of the charge control agent, are a styrene resin, a styrene-acrylate resin, a styrene-butadiene resin, a styrene-maleic acid resin, a styrene-methylvinylether resin, a styrene-methacrylate copolymer, a phenol resin, an epoxy resin, a paraffin wax, an acrylate resin, a polyester resin. The exemplified resin may be used solely or plurally with blending.

Although the examples that the host particles are the toner particles including the charge control agent by the granulation method or the polymerization method are described, the host particles may be the toner including no charge control agent by the granulation method or the polymerization method.

A binary component developer using the toner for the electrostatic image development is prepared with mixing the toner and a carrier. This developer is used for developing by a binary component magnetic brush development method and so on. Examples of the carrier are powder of iron or nickel or magnetite or ferrite and glass beads whose particle size is ranging from 50 to 200 microns, the modified powder or the modified beads whose surfaces are coated with an acrylate copolymer, a styrene-acrylate copolymer, a styrene-methacrylate copolymer, a silicone resin, a polyamide resin or a fluoroethylene resin.

A unary component developer using the toner for the electrostatic image development is prepared with adding and dispersing appropriate ferromagnetic particulates such as powder of iron or nickel or ferrite on the occasion of the preparing of the toner. This developer is used for developing by a contact development method or a jumping development method.

### Brief Description of the Drawings

Fig. 1 is a figure showing a measurement result by a liquid chromatography mass spectrometric analysis (LC/MS) of an example of the silicon complex compound, which applies this invention.
Fig. 2 is a figure showing a measurement result by a field desorption mass spectrometric analysis (FD/MS) of other example of the silicon complex compound that applies this invention.
Fig. 3 is a figure showing a measurement result by a liquid chromatography mass spectrometric analysis (LC/MS) of the other example of the silicon complex compound that applies this invention.
Fig. 4 is a figure showing a measurement result by a liquid chromatography mass spectrometric analysis (LC/MS) of the other example of the silicon complex compound that applies this invention.

### Detailed Explanation of the Invention

Hereunder, embodiments of this invention are explained in detail. The invention is not limited to these embodiments.

The following synthetic examples 1 to 4 indicate embodiments of the synthesis of the silicon complex compound used for the charge control agent that applies this invention.

### Synthetic Example 1: synthesis of the compound example 5

5.00g (40.9mmol) of tropolone was dissolved in 20ml of carbon tetrachloride. A solution that 2.32g (13.6mmol) of silicon tetrachloride was dissolved in 20ml of carbon tetrachloride was added dropwise at the room temperature thereto. It was refluxed for 1 hour and cooled, and then precipitated white crystals were filtrated and washed with 200ml of carbon tetrachloride. It was dried at 80 degrees centigrade for 24 hours, to obtain 5.55g (13.0mmol) of the compound example 5.

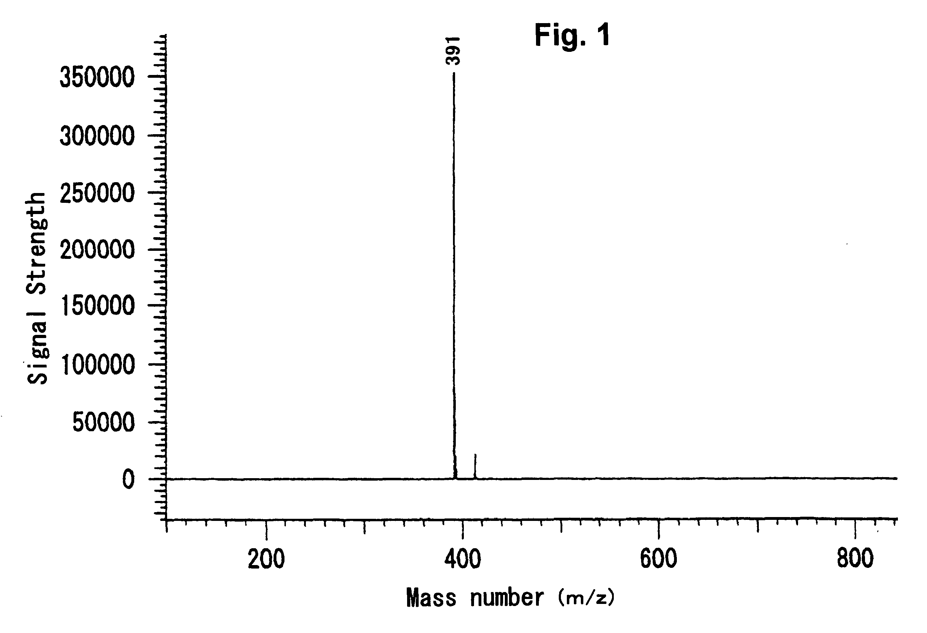

The data of measurement result of the compound example 5 by the liquid chromatography mass spectrometric analysis (LC/MS) using M-8000 TYPE LC/3DQMS that is available from Hitachi, Ltd. is shown in Fig 1. An actual value m/z is 391 as Fig. 1, and mostly in agreement with 391.4 of the theoretical value which the chloride ion is eliminated from this compound having 426.88 of the theoretical value. So it is identified as the desired compound.

### Synthetic Example 2: synthesis of the compound example 6

5.00g (30.5mmol) of hinokitiol was dissolved in 300ml of hexane. A solution that 1.72g (10.2mmol) of silicon tetrachloride was dissolved in 50ml of hexane, was added dropwise thereto. It was refluxed for 1 hour and cooled, and then precipitated white crystals were filtrated and washed with 300ml of hexane. It was dried under reduced pressure at 70 degrees centigrade for 24 hours, to obtain 5.49g (9.9mmol) of the compound example 6.

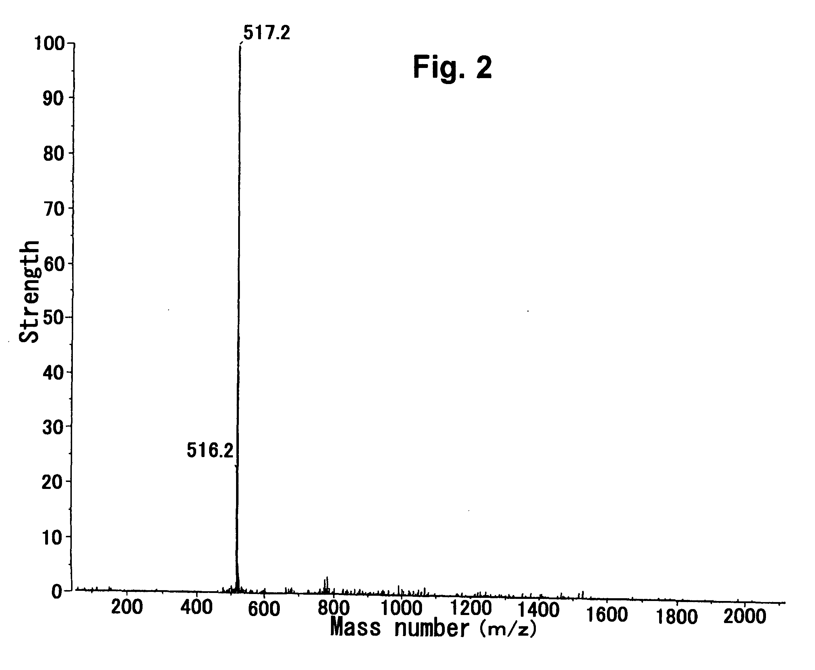

The data of measurement result of the compound example 6 by the field desorption mass spectrometric analysis (FD/MS) using JMS-AX505HA that is available from JEOL, is shown in Fig 2. An actual value m/z is 517.2 as Fig. 2, and mostly in agreement with 517.6 of the theoretical value which the chloride ion is eliminated from this compound having 553.12 of the theoretical value. So it is identified as the desired compound.

### Synthetic Example 3: synthesis of the compound example 10

4.00g (18.8mmol) of N-benzyl-N-phenylhydroxyamine was dissolved in 20ml of toluene. A solution that 1.06g (6.25mmol) of silicon tetrachloride was dissolved in 20ml of toluene, was added dropwise at the room temperature thereto. It was refluxed for 2 hours and cooled, and then precipitated white crystals were filtrated and washed with 300ml of toluene. It was dried under reduced pressure at 70 degrees centigrade for 24 hours, to obtain 3.87g (5.53mmol) of the compound example 10.

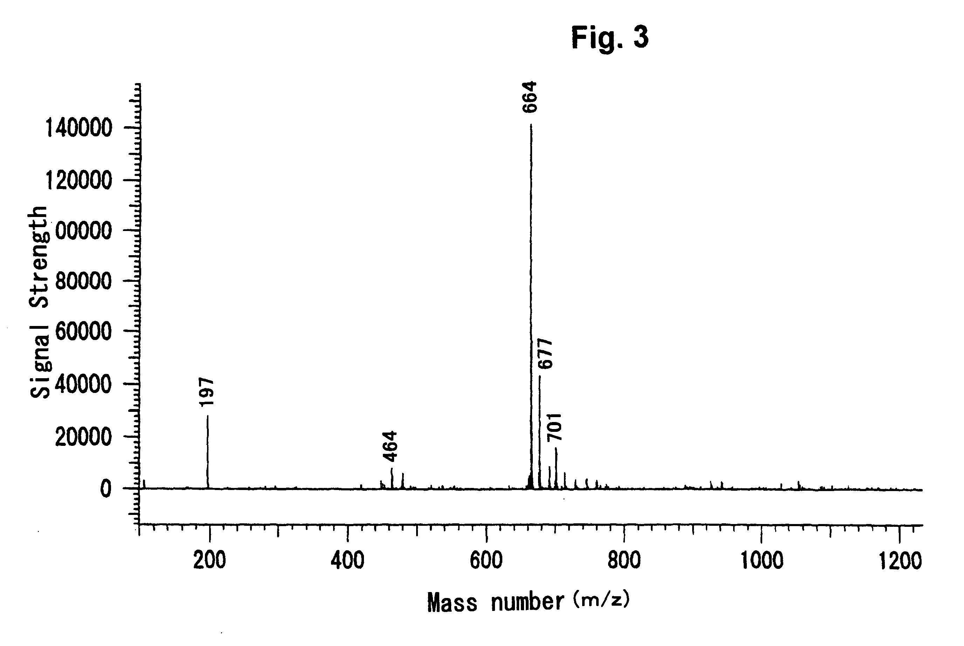

The data of measurement result of the compound example 10 by the liquid chromatography mass spectrometric analysis (LC/MS) using M-8000 TYPE LC/3DQMS that is available from Hitachi, Ltd. is shown in Fig 3. An actual value m/z is 664 as Fig. 3, and mostly in agreement with 664.71 of the theoretical value which the chloride ion is eliminated from this compound having 700.21 of the theoretical value. So it is identified as the desired compound.

### Synthetic Example 4: synthesis of the compound example 17

5.00g (49.94mmol) of acetylacetone was dissolved in 50ml of THF. A solution that 3.47g (16.65mmol) of tetraethoxysilane was dissolved in 50ml of THF, was added dropwise at the room temperature thereto. It was refluxed for 30 minutes and cooled, and then precipitated white crystals were filtrated and washed with 200ml of THF. It was dried under reduced pressure at 70 degrees centigrade for 24 hours, to obtain 4.47g (12.07mmol) of the compound example 17.

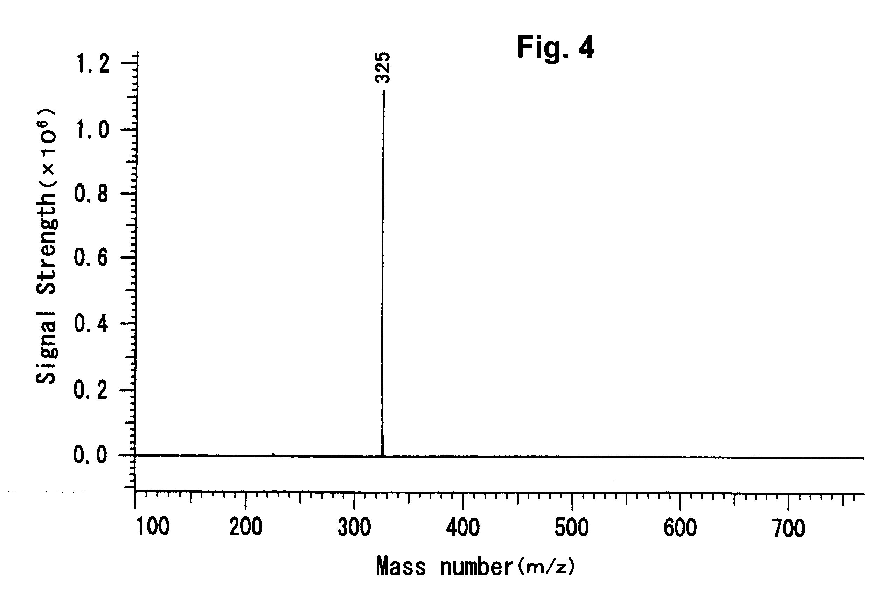

The data of measurement result of the compound example 17 by the liquid chromatography mass spectrometric analysis (LC/MS) using M-8000 TYPE LC/3DQMS that is available from Hitachi, Ltd. is shown in Fig 4. An actual value m/z is 325 as Fig. 4, and mostly in agreement with 325.47 of the theoretical value which the chloride ion is eliminated from this compound having 370.47 of the theoretical value. So it is identified as the desired compound.

The various silicon complex compounds of the invention were synthesized by the similar procedure.

Examples 1 to 7 show the preparing of the toner for developing the electrostatic image included the silicon complex compound as the charge control agent, and the formation of the image onto the paper using the toner.

### Example 1

100 weight parts of stylene-acrylate copolymer: CPR-600B which is available from Mitsui Chemicals, Inc., 3 weight parts of low grade polypropylene: VISCOL 550-P which is available from Sanyo Kasei Industries, Ltd., 5 weight parts of oil soluble color dye of magenta: OIL PINK #312 which is available from Orient Chemical Industries, Ltd., and 1 weight part of the charge control agent: compound example 5, were pre-mixed homogeneously using a high speed mixer. It was kneaded with melting by an extruder. It was cooled, and granulated roughly by a vibration mill. The prepared rough granules were granulated finely using an air jet mill equipping with a classifier, to obtain the magenta toner having 10 microns of the particle size thereof.

5 parts by weight of the obtained toner and 95 parts by weight of the carrier of iron powder: TEFV200/300 which is available from Powder Tech Corporation were mixed to prepare the developer.

After the developer was weighed into a plastic bottle, it was agitated at 100 r.p.m. rotating speed by a boll mill to electrify. The elapsed time and the quantity of the electrification were measured under the standard condition of 60% relative humidity (RH) at 20 degrees centigrade. The measurement results between the agitation time and the quantity of the frictional electrification are shown in Table 1. Under the low temperature and humidity condition of 30% relative humidity at 5 degrees centigrade, or the high temperature and humidity condition of 90% relative humidity at 35 degrees centigrade, the initial blow-off quantity of the electrification, the stability thereof, were measured in the same way. The results are shown in Table 2.

The quantity of the electrification was measured using an instrument TB-200, the blow-off measuring instrument of the quantity of the electrification, is available from Toshiba Chemical Corporation.

The images of the toner were formed using the developer by a commercial copying machine having a drum of an organic photoconductor (OPC). Fogginess, reproducibility of fine lines, electrification stability and durability, and phenomenon of offset were visually observed as regards the formed images of the toner.

The images of the toner are evaluated with two ranks. In case of no fogginess, it indicates as "o", and if other case, it indicates as "x". In case of excellent reproducibility of fine lines, it indicates as "o", and if other case, it indicates as "x". In case of excellent electrification stability and durability, it indicates as "o", and if other case, it indicates as "x". In case of observation of phenomenon of offset, it indicates as "o", and if other case, it indicates as "x". The evaluation results are shown in Table 3.

### Example 2

100 weight parts of stylene-acrylate copolymer: CPR-600B which is available from Mitsui Chemicals, Inc., 5 weight parts of hansa yellow: C.I. pigment yellow 97, 3 weight parts of low grade polypropylene: VISCOL 550-P which is available from Sanyo Kasei Industries, Ltd., 1 weight part of the charge control agent: compound example 6, were treated like Example 1, to prepare the yellow toner having 10 microns of the average particle size thereof and the developer. The measurement results between the agitation time and the quantity of the frictional electrification, and the results of the stability thereof like Example 1, are shown in Table 1 and 2.

The images of the toner were formed using this developer like Example 1. The evaluation results are shown in Table 3.

### Example 3

100 weight parts of polyester resin: HP313 which is available from Nippon Synthetic Chemical Industry Co., Ltd., 3 weight parts of low grade polypropylene: VISCOL 550-P which is available from Sanyo Kasei Industries, Ltd., 6 weight parts of carbon black: MA-100 which is available from Mitsubishi Chemical Corporation, 1 weight part of the charge control agent: compound example 8, were treated like Example 1, to prepare the black toner having 10 microns of the average particle size thereof and the developer. The measurement results between the agitation time and the quantity of the frictional electrification and the results of the stability thereof like Example 1, are shown in Table 1 and 2.

The images of the toner were formed using this developer like Example 1. The evaluation results are shown in Table 3.

### Example 4

80 weight parts of styrene monomer, 20 weight parts of n-butyl acrylate monomer, 5 weight parts of hansa yellow: C.I. pigment yellow 97, 1.8 weight parts of 2,2'-azoisobutyronitrile, and 1 weight part of the charge control agent: compound example 10, were pre-mixed homogeneously using a high speed mixer, to obtain the monomer composition.

While 100 ml of 0.1 mol% sodium phosphate aqueous solution was diluted with 600ml of distilled water. 18.7 ml of 1.0 mol/l calcium chloride aqueous solution was added thereto gradually with stirring, then 0.15g of 20% of concentration of sodium dodecylbenzenesulfonate aqueous solution, to prepare dispersion liquid.

The dispersion liquid was added to the above monomer composition. It was heated until 65 degrees centigrade with fast stirring using T.K. HOMO MIXER that is available from Tokushu Kika Kogyo Co., Ltd, then stirred for 30 minutes. Furthermore, it was heated until 80 degrees centigrade with stirring at 100 r.p.m. using a usual stirrer in turn, and then it was carried out polymerization at 80 degrees centigrade for 6 hours.

After polymerization, the reaction mixture was cooled, and the solid was filtered out. After the filtered solid was soaked into 5 weight% of concentration of hydrochloric acid aqueous solution in order to decompose calcium phosphate which is functioned as the dispersing agent, the solid was washed with water until its washing was neutral. It was dehydrated and dried, to obtain the yellow toner having 10 microns of the average particle size thereof.

5 parts by weight of the obtained toner and 95 parts by weight of carrier of iron powder: TEFV200/300 which is available from Powder Tech Corporation were mixed to prepare the developer. The measurement results between the agitation time and the quantity of the frictional electrification and the results of the stability thereof like Example 1, are shown in Table 1 and 2.

The images of the toner were formed using this developer like Example 1. The evaluation results are shown in Table 3.

### Example 5

80 weight parts of styrene monomer, 20 weight parts of n-butyl acrylate monomer, 5 weight parts of carbon black: MA-100 which is available from Mitsubishi Chemical Corporation, 1.8 weight part of the 2,2'-azoisobutyronitrile, 1 weight part of the charge control agent: compound example 17, were treated like Example 4, to prepare the black toner having 13 microns of the average particle size thereof and the developer. The measurement results between the agitation time and the quantity of the frictional electrification and the results of the stability thereof like Example 1, are shown in Table 1 and 2.

The images of the toner were formed using this developer like Example 1. The evaluation results are shown in Table 3.

### Example 6

100 weight parts of stylene-acrylate copolymer: CPR-600B which is available from Mitsui Chemicals, Inc., 3 weight parts of low grade polypropylene: VISCOL 550-P which is available from Sanyo Kasei Industries, Ltd., and 5 weight parts of oil soluble color dye of magenta: OIL PINK #312 which is available from Orient Chemical Industries, Ltd., were pre-mixed homogeneously using a high speed mixer. It was kneaded with melting by an extruder. It was cooled, and granulated roughly by a vibration mill. The prepared rough granules were granulated finely using an air jet mill equipping with a classifier, to prepare the host particles of magenta toner having 10 microns of the particle size thereof.

1 weight part of the guest particles of the charge control agent: compound example 6 was added externally to 108 weight parts of the prepared host particles, to obtain the toner.

5 parts by weight of the toner and 95 parts by weight of carrier of iron powder: TEFV200/300 which is available from Powder Tech Corporation were mixed to prepare the developer.

After the developer was weighed into a plastic bottle, it was agitated at 100 r.p.m. rotating speed by a boll mill to electrify. The elapsed time and the quantity of the electrification were measured. The measurement results between the agitation time and the quantity of the frictional electrification and the results of the stability thereof like Example 1, are shown in Table 1 and 2.

The images of the toner were formed using this developer like Example 1. The evaluation results are shown in Table 3.

### Example 7

100 weight parts of stylene-acrylate copolymer: CPR-600B which is available from Mitsui Chemicals, Inc., 3 weight parts of low grade polypropylene: VISCOL 550-P which is available from Sanyo Kasei Industries, Ltd., 5 weight parts of oil soluble color dye of magenta: OIL PINK #312 which is available from Orient Chemical Industries, Ltd., 0.5 weight parts of the charge control agent: BONTRON P-51 which is available from Orient Chemical Industries, Ltd., and 0.5 weight parts of the charge control agent: compound example 5, were treated like Example 1, to prepare the magenta toner having 10 microns of the average particle size thereof and the developer. The measurement results between the agitation time and the quantity of the frictional electrification and the results of the stability thereof like Example 1, are shown in Table 1 and 2.

The images of the toner were formed using this developer like Example 1. The evaluation results are shown in Table 3.

**Table 1**

| | Example | Agitation Time (min.) | | | | | |
|---|---|---|---|---|---|---|---|
| | | 1 | 3 | 5 | 10 | 15 | 30 |
| Quantity of Electrification (micro C/g) | 1 | 24.8 | 25.2 | 27.0 | 27.7 | 28.0 | 27.5 |
| | 2 | 31.5 | 32.3 | 35.2 | 37.6 | 41.9 | 41.5 |
| | 3 | 22.2 | 23.0 | 23.3 | 23.3 | 23.8 | 24.0 |
| | 4 | 21.3 | 22.3 | 23.5 | 24.0 | 24.2 | 24.5 |
| | 5 | 23.3 | 23.5 | 24.0 | 25.0 | 25.1 | 25.3 |
| | 6 | 32.5 | 33.5 | 34.5 | 35.1 | 35.3 | 35.1 |
| | 7 | 23.3 | 24.5 | 26.3 | 28.7 | 29.5 | 31.7 |

**Table 2**

| | Example | 5°C-30%RH | 20°C-60%RH | 35°C-90%RH |
|---|---|---|---|---|
| Quantity of Electrification (micro C/g) | 1 | 27.9 | 27.7 | 27.6 |
| | 2 | 38.0 | 37.6 | 37.0 |
| | 3 | 23.8 | 23.3 | 22.9 |
| | 4 | 24.3 | 24.0 | 23.8 |
| | 5 | 25.0 | 25.0 | 24.7 |
| | 6 | 35.9 | 35.1 | 34.6 |
| | 7 | 29.1 | 28.7 | 28.0 |

**Table 3**

| | Example | | | | | | |
|---|---|---|---|---|---|---|---|
| | 1 | 2 | 3 | 4 | 5 | 6 | 7 |
| Fogginess | ○ | ○ | ○ | ○ | ○ | ○ | ○ |
| Reproducibility of Fine Lines | ○ | ○ | ○ | ○ | ○ | ○ | ○ |
| Electrification Stability and Durability | ○ | ○ | ○ | ○ | ○ | ○ | ○ |
| Phenomenon of Offset | ○ | ○ | ○ | ○ | ○ | ○ | ○ |

According to Tables 1 to 3, it is obvious that the toners of example 1 to 7 cause the fast rise speed of electrification, sufficient positive electrification, and have excellent electrification stability, preservation stability, and stability to fluctuation of temperature or humidity. The images of the toner developed using the toner had no fogginess, excellent reproducibility of fine lines, excellent electrification stability and durability, no decline of density, high quality. It was not observed phenomenon of offset at all. The images of the toner for color have excellent spectral property, and were vivid.

### Industrial Applicability

As it is mentioned above in detail, the charge control agent including the silicon complex compound of the invention causes excellent positive electrification property of the toner for developing the electrostatic image and the powder paint. It has excellent preservation stability, environmental hygiene. The charge control agent is used for addition to not only monochrome toner but also various chromatic color toners extensively.

The toner for developing the electrostatic image including the charge control agent of the invention causes the fast rise speed of electrification, excellent electrification stability for long time to fluctuation of temperature or humidity. The obtained toner has electrification property with very little deviation among the particles of the toner, because of excellent dispersibility of the charge control agent to the resin for the toner. The toner for developing the electrostatic image is suitable to develop the electrostatic image on the photosensitive frame which is made from any matter of regardless of organic or inorganic type. Furthermore not only a regular paper but processing paper, a processing film, and so on, are suitable for transfer recording mediums. The images of the toner developed with the toner for developing the electrostatic image have fixing property under extensive temperature region. The fixed images are vivid and no fogginess to back ground, and has non-offset property and no degradation for long time.

## Claims

1. A positive electrified charge control agent comprising a silicon complex compound bonding with covalent of a central silicon atom and oxygen originated from a hydroxyl group, which bonds to an organic group, and bonding with coordination of the central silicon atom and a carbonyl group of equivalent to the oxygen,
the silicon complex compound comprises a trivalent to univalent cation and a trivalent to univalent anion having 1 to 3 equivalents of the oxygen and the carbonyl group to the central silicon atom.

2. The positive electrified charge control agent according to claim 1, wherein said silicon complex compound is represented by the following chemical formula (I) 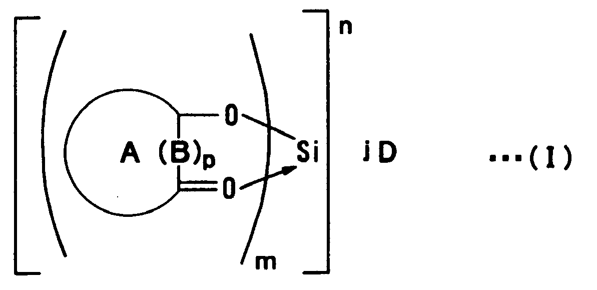 in the formula (I), m and j are 1 to 3, n is 3+ to 1+, D is the univalent to trivalent anion, A is a chain organic or cyclic organic residuary group, B is a carbon atom or a nitrogen atom, p is 0 or 1.

3. The positive electrified charge control agent according to claim 2, wherein the chemical formula (I) is a group selected from the groups represented by the following formulas (II) 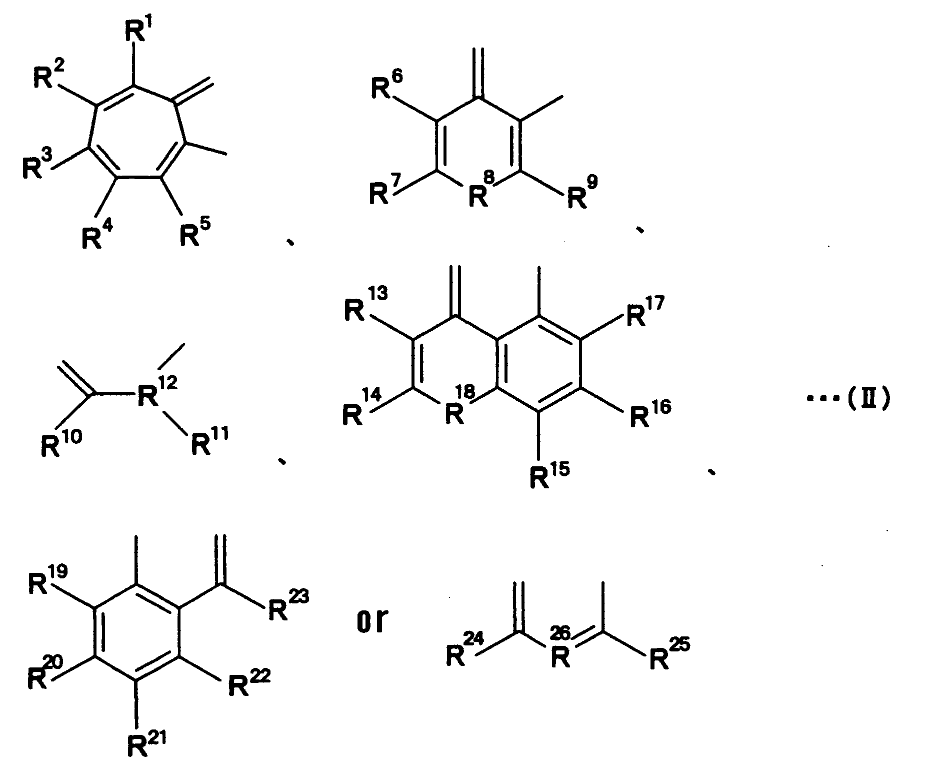 in the formulas (II), R¹ to R⁷, R¹³ to R¹⁷, R¹⁹ to R²² are same or different to each other and one thereof is selected from the groups consisting of a hydrogen atom, a hydroxyl group, a hydroxyalkyl group, a carboxyl group, an alkoxycarbonyl group, a formyl group, a halogen atom, an alkyl group, an alkoxyl group, an acyl group, an alkenyl group, a nitro group, a cyano group, an amino group, an alicyclic group being to have substitutional groups, an aralkyl group being to have substitutional groups and an aryl group being to have substitutional groups, or a group had 3 to 7 carbons forming a saturated or unsaturated fused-ring at positions of neighboring group being to have substitutional groups; R⁸ and R¹⁸ are an oxygen atom, a carbonyl group, or an imino group; R⁹ to R¹¹, R²³ to R²⁵ are same or different to each other and one thereof is selected from the groups consisting of a hydrogen atom, a hydroxyl group, a hydroxyalkyl group, a carboxyl group, an alkoxycarbonyl group, a formyl group, a halogen atom, an alkyl group, an alkoxyl group, an acyl group, an alkenyl group, a nitro group, a cyano group, an amino group, an alicyclic group being to have substitutional groups, an aralkyl group being to have substitutional groups and an aryl group being to have substitutional groups; R¹² is a methine or a nitrogen atom; R²⁶ is a nitrogen atom or a carbon atom being to have substitutional groups.

4. A toner for developing an electrostatic image including a component of the positive electrified charge control agent comprising a silicon complex compound bonding with covalent of a central silicon atom and an oxygen originated from a hydroxyl group, which bonds to an organic group, and bonding with coordination of the central silicon atom and a carbonyl group of equivalent to the oxygen, the silicon complex compound comprises a trivalent to univalent cation and a trivalent to univalent anion having 1 to 3 equivalents of the oxygen and the carbonyl group to the central silicon atom.

5. The toner for developing the electrostatic image according to claim 4, wherein 0.1 to 10 parts by weight of the positive electrified charge control agent and 100 parts by weight of a resin for the toner are included.

6. A charge control method of the toner for developing the electrostatic image comprising a step for making the toner positively electrify by friction,
wherein the toner includes a component of the positive electrified charge control agent comprising a silicon complex compound bonding with covalent of a central silicon atom and oxygen originated from a hydroxyl group, which bonds to an organic group, and bonding with coordination of the central silicon atom and a carbonyl group of equivalent to the oxygen,
the silicon complex compound comprises a trivalent to univalent cation and a trivalent to univalent anion having 1 to 3 equivalents of the oxygen and the carbonyl group to the central silicon atom.
